# EUROPEAN PATENT SPECIFICATION

(11) **EP 2 639 440 B1**
(45) Date of publication and mention of the grant of the patent: **03.01.2018**
(21) Application number: 11840180.1
(22) Date of filing: 02.11.2011
(51) Int. Cl.: F02B 41/10, F02M 26/23, F02M 26/34, F02M 26/35, F02G 5/02, F02M 26/07

(54) **ENGINE EXHAUST GAS PURIFICATION DEVICE**
MOTORABGASREINIGUNGSVORRICHTUNG
DISPOSITIF DE PURIFICATION DE GAZ D'ÉCHAPPEMENT D'UN MOTEUR

(30) Priority: 09.11.2010 JP 2010250962
(43) Date of publication of application: 18.09.2013
(73) Proprietor: Mitsubishi Heavy Industries, Ltd., Tokyo 108-8215 (JP); Japan Engine Corporation, Futami-Cho Akashi-City Hyogo 674-0093 (JP)
(72) Inventor: MURATA, Satoru, Tokyo 108-8215 (JP); HIGUCHI, Jun, Tokyo 108-8215 (JP)
(74) Representative: Hoffmann Eitle
(86) International application number: PCT/JP2011/075358
(87) International publication number: WO 2012/063718

(56) References cited:
- EP-A2- 1 186 767
- WO-A1-2008/062254
- WO-A1-2010/057910
- JP-A- 5 071 428
- JP-A- 8 254 160
- JP-A- H08 284 763
- JP-A- 2002 089 375
- US-A1- 2007 119 171
- US-A1- 2007 193 270

## Description

### {Technical Field}

The present invention relates to an engine exhaust gas purification device which is applied to, for example, marine main diesel engines or the like.

### {Background Art}

Diesel engines used as marine main engines are under a tendency that regulations on exhaust gases relevant to sulfur oxides (SOx), nitrogen oxides(NOx) or the like, which are applied to ships, are getting stringent.

As for an art for reducing nitrogen oxides generated from diesel engines, there is known an exhaust gas recirculation (EGR). The exhaust gas recirculation (hereinafter referred to as "EGR") takes a portion out of exhaust gases after combustion and guides the same to the air supply side to supply the exhaust gases to an engine again. There are known high pressure EGR and low pressure EGR.

As for conventional arts relevant to the EGR, for example, an exhaust gas cleaning unit called as scrubber is known as described in Publication of Japanese Patent No. 3304090 1 and Japanese Unexamined Patent Application, Publication No. 2002-332919. In these arts, a portion of exhaust gases used for the EGR is cleaned while passing through a scrubber. The scrubber separates sulfur oxides and particles contained in the exhaust gases by using a liquid such as cleaning water as the cleaning liquid to capture the sulfur oxides and particles with droplets or a film of the cleaning liquid.

Publication of Japanese Patent No. 3304090 discloses a high pressure EGR in which exhaust gases, which has passed through a scrubber, is supplied after being blown with a blower to raise the pressure thereof to a high pressure. Also, Japanese Unexamined Patent Application, Publication No. 2002-332919 discloses a low pressure EGR in which a small capacity blower is used for raising the pressure to make up for the pressure lost while passing through the scrubber.

### {Citation List}

### {Patent Literature}

WO 2010/057910 A1 discloses an engine exhaust gas purification device which represents the closest prior art.

### {Summary of Invention}

### {Technical Problem}

The above-mentioned high pressure EGR and low pressure EGR have the following problems.

In the case of the high pressure EGR, since the exhaust gases, which have passed through a scrubber, has to be pressurized to a level of scavenging pressure (high pressure), the capacity for a pressurizing blower gets too large. Therefore, a drive force required for driving a pressuring blower also gets larger. For example, when the pressuring blower is driven with an electric motor, the number of power generating auxiliary machines has to be increased to supply necessary power. The increase of the power generating auxiliary machines leads to an increase of the cost and a reduction of the degree of layout freedom. Moreover, since the power generating auxiliary machine is poor in mileage resulting in an increase of operational cost of the ship. In the case of high pressure EGR, since the scrubber is specified a high temperature and high pressure, since sulphuric acid is generated, in addition to corrosion prevention against sulphuric acid, it is necessary to ensure a long term reliability.

On the other hand, in the case of the low pressure EGR, compared to a blower required for the high pressure EGR, although the capacity of a blower may be smaller, an electric blower is required for making up for pressure lost while passing through the scrubber. Therefore, since an electric power for driving the electric blower is required, although smaller than the high pressure EGR, the number of the power generating auxiliary machines has to be increased for supply the electric power necessary for driving the blower.

The present invention has been proposed in view of the above circumstances. An object of the present invention is to provide an engine exhaust gas purification device which reduces or eliminates the electric power required for raising the pressure of the exhaust gas (recirculation exhaust gas) which is extracted from the upstream of the exhaust gas turbocharger for the purpose of the exhaust gas recirculation (EGR) after being cleaned by an exhaust gas cleaning unit.

### {Solution to Problem}

The above problems are solved by an engine gas purification device with the features of claim 1. Preferred embodiments follow from the other claims.

The present invention employs the following means.

An engine exhaust gas purification device according to the present invention is an engine exhaust gas purification device for reducing or eliminating air pollution substances contained in exhaust gases discharged from a marine main engine equipped with an exhaust gas turbocharger, which comprises: an exhaust gas cleaning unit that cleans a portion of the exhaust gases introduced as a recirculation exhaust gas from an exhaust line located at the upstream side of a turbine unit in the exhaust gas turbocharger; and a recirculation exhaust gas turbocharger disposed at the upstream side of the exhaust gas cleaning unit for raising the pressure of the recirculation exhaust gas which is caused to pass through the exhaust gas cleaning unit by a recirculation compressor unit coaxial with a recirculation turbine unit driven by using the recirculation exhaust gas.

According to the above-described engine exhaust gas purification device, there are provided with the exhaust gas cleaning unit that cleans a portion of the exhaust gases introduced as a recirculation exhaust gas from an exhaust line located at the upstream side of a turbine unit in the exhaust gas turbocharger, and the recirculation exhaust gas turbocharger disposed at the upstream side of the exhaust gas cleaning unit for raising the pressure of the recirculation exhaust gas which is caused to pass through the exhaust gas cleaning unit by a recirculation compressor unit coaxial with a recirculation turbine unit driven by using the recirculation exhaust gas. Therefore, the pressure of the cleaned recirculation exhaust gas can be raised by the recirculation exhaust gas turbocharger by efficiently utilizing the energy emitted from the marine main engine. With this, the exhaust gas cleaning unit has to clean only the recirculation exhaust gas the temperature and the pressure of which are lowered after being used for performing a work at the recirculation turbine unit. A device, which is specified at a low temperature and a low pressure, may be employed.

The above invention preferably has a structure that the recirculation exhaust gas pressurized by the recirculation compressor unit is supplied together with fresh air to the compressor unit of the exhaust gas turbocharger. With this, no electric blower is required for raising the pressure of the cleaned recirculation exhaust gas. Therefore, the cleaned recirculation exhaust gas can be supplied to the compressor unit of the exhaust gas turbocharger after the pressure is raised without consuming the electric power.

The engine exhaust gas purification device having the above-described structure preferably includes a heat exchanger that cools the recirculation exhaust gas pressurized by the recirculation compressor unit and supplies the same to the compressor unit of the exhaust gas turbocharger. With this, the density of the recirculation exhaust gas can be increased.

In the above-described invention, the recirculation exhaust gas pressurized by the recirculation compressor unit is supplied, after being re-pressurized by a blower, so as to merge with fresh air which has been pressurized by the compressor unit of the exhaust gas turbocharger. With this, the air can be supplied after the pressure thereof is raised to a scavenging pressure level by a small capacity electric blower which consumes a small electric power.

In the above-described invention, the recirculation exhaust gas turbocharger is preferably a hybrid turbocharger equipped with a power generator coaxial therewith. With this, the pressure of the recirculation exhaust gas can be raised by the recirculation exhaust gas turbocharger as well as electric power can be obtained by effectively using the output from the recirculation exhaust gas turbocharger.

### {Advantageous Effects of Invention}

According to the engine exhaust gas purification device of the present invention, the pressure of the cleaned recirculation exhaust gas is raised by the recirculation exhaust gas turbocharger by efficiently using the energy emitted from the marine main engine and by using the output of the recirculation exhaust gas. Therefore, the exhaust gas cleaning unit has to clean only the recirculation exhaust gas of a low temperature and a low pressure after being used for performing a work at the recirculation turbine unit. Accordingly, a device specified at a low temperature and low pressure, which provides a high reliability and durability, can be employed.

Also, the engine exhaust gas purification device raises the pressure of the cleaned recirculation exhaust gas by the recirculation exhaust gas which performs a work in the recirculation turbine unit. Therefore, an electric-driven pressurizing blower may be eliminated or a small capacity pressurizing blower may be employed to reduce the power consumption. With this, the number of power generating auxiliary machines (power generation capacity) for supplying the electric power necessary for driving the discharge gas cleaning device can be reduced. Accordingly, the cost of the device can be reduced and the degree of layout freedom in the ship is increased, and the operational cost of the ship can be reduced accompanying the reduction of the number of the power generating auxiliary machines which has a mileage problem.

### {Brief Description of Drawings}

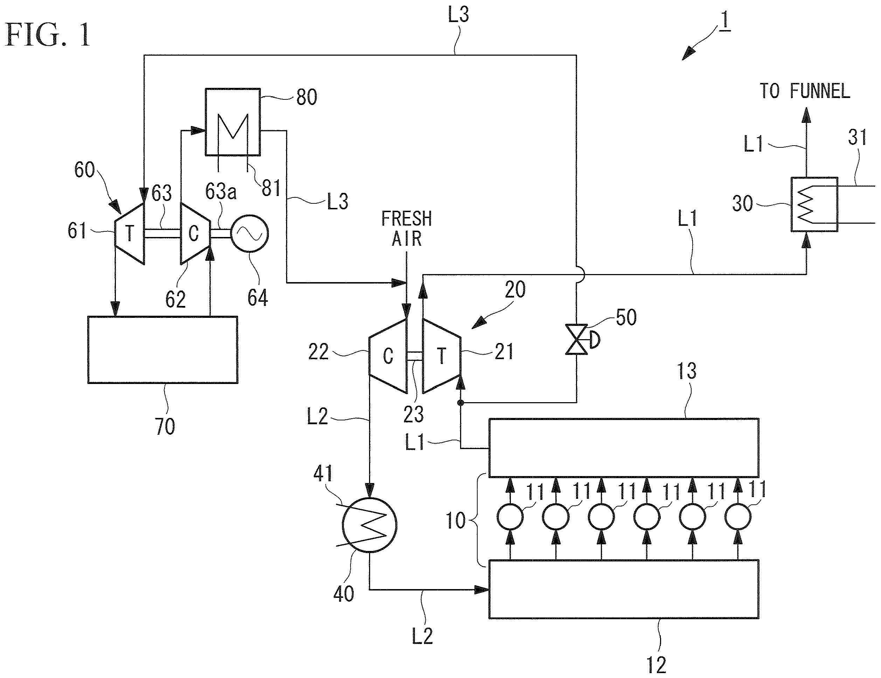

{Fig. 1}
   Fig. 1 is a schematic diagram showing a structure of a first embodiment of an engine exhaust gas purification device according to the present invention, which is incorporated mainly in an intake/exhaust system of a main engine for ships.
{Fig. 2}
   Fig. 2 is a schematic diagram showing a structure of a second embodiment of an engine exhaust gas purification device according to the present invention, which is incorporated mainly in an intake/exhaust system of a main engine for ships.

### {Description of Embodiments}

Referring to Fig. 1, a first embodiment of an engine exhaust gas purification device according to the present invention will be described below. Fig. 1 is a schematic diagram illustrating a structure of an engine exhaust gas purification device, which is incorporated in a main engine intake/exhaust system of a ship.

An engine exhaust gas purification device (hereinafter referred to as "purification device") 1 shown in Fig. 1 is a device for reducing and eliminating harmful matters (air pollution substances) such as sulfur oxides, nitrogen oxides and the like contained in exhaust gases from a main engine (for example, a diesel engine) 10 which propels a ship.

The ship is mounted with a main engine 10 for propelling the ship. Exhaust gases from the main engine 10 are discharged to the atmosphere through a funnel.

The main engine 10 is structured including a plurality of cylinders 11, an intake manifold 12 and an exhaust manifold 13. Fuel is supplied to each cylinder 11 via a fuel supply system (not shown) and injected therein. The fuel reacts with oxygen contained in the air supplied through the intake manifold 12 and burns in the cylinder 11. The main engine 10 converts the thermal energy contained in the fuel into an engine power, and at the same time, exhaust gases are generated due to the combustion.

The exhaust gases generated in each cylinder 11 are collected in the exhaust manifold 13 and are guided to the funnel through the exhaust line L1. The exhaust line L1 is provided with a turbine unit 21 of an exhaust gas turbocharger 20 and an exhaust gas economizer 30.

The exhaust gas turbocharger 20 is a device that rotates the turbine unit 21 at a high speed utilizing the energy (kinetic energy and thermal energy) included in the exhaust gases to drive compressor unit 22 utilizing the torque to thereby compress the supplied air. Reference numeral 23 in the figure denotes a rotary shaft connecting the turbine unit 21 and the compressor unit 22.

The exhaust gas economizer 30 is a heat exchanger that exchanges the heat between the exhaust gases discharged from the main engine 10 and water supplied through a water-supply pipe 31 to generate vapor. That is, the exhaust gas economizer 30 is a device to obtain vapor by collecting the thermal energy of the exhaust gases for efficiently utilizing the thermal energy included in the exhaust gases.

The intake manifold 12 is connected with an air supply line L2 including the compressor unit 22 of the exhaust gas turbocharger 20 and an air cooler (intercooler) 40. Therefore, the supplied air introduced through the air supply line L2 is supplied to each cylinder 11 via the intake manifold 12.

The air cooler 40 is a heat exchanger for cooling the supplied air, the temperature of which is increased being compressed by the turbocharger. The air cooler 40 is effective for increasing the energy-efficiency and the output of the main engine 10. Reference numeral 41 in the figure denotes a water-supply pipe for supplying cooling water as the cooling medium.

Provided downstream of the exhaust manifold 13 is an exhaust gas recirculation line (hereinafter referred to as "EGR line") L3 which is branched in the halfway of the exhaust line L1 to extract a portion of the exhaust gases as recirculation exhaust gas (hereinafter referred to as "EGR gas"). The EGR line L3 is branched at the upstream side of the turbine unit 21 and connected to the intake side of the compressor unit 22.

The EGR line L3 includes a flow control valve 50, a recirculation exhaust gas turbocharger (hereinafter referred to as, "EGR turbocharger") 60, an exhaust gas cleaning unit 70 and an EGR heat exchanger 80 for cooling the EGR gas which are disposed in this order from the branching point of the exhaust line L1.

The flow control valve 50 controls the opening in accordance with the output control or the like of the main engine 10 to adjust the amount of the EGR gas to be introduced from the exhaust line L1 to the EGR line L3.

The EGR turbocharger 60 is a device that includes a recirculation turbine unit (hereinafter referred to as "EGR turbine unit") 61, which is disposed at the upstream side of the exhaust gas cleaning unit 70 and is driven by utilizing the EGR gas, and a recirculation compressor unit (hereinafter referred to as, "EGR compressor unit") 62 coaxial with the EGR turbine unit 61. The EGR turbocharger 60 compresses the EGR gas which has passed through the exhaust gas cleaning unit 70 to pressurize the same. Reference numeral 63 in the figure denotes a rotary shaft connecting the EGR turbine unit 61 and the EGR compressor unit 62.

The exhaust gas cleaning unit 70 is a device that eliminates harmful matters contained in the exhaust gases, which uses a liquid like water as the cleaning liquid to capture and separate the sulfur oxides, particles and the like contained in the exhaust gases by droplets or a film of the cleaning liquid. In this case, the exhaust gases processed by the exhaust gas cleaning unit 70 is the EGR gas which has passed through the EGR turbine unit 61 of the EGR turbocharger 60. Compared to the exhaust gases flowing out of the exhaust manifold 13, the pressure is reduced and the temperature is slightly reduced. Therefore, the reliability and the durability of the exhaust gas cleaning unit 70 are enhanced.

The EGR heat exchanger 80 is a heat exchanger that cools the EGR gas which is compressed by the EGR compressor unit 62 by exchanging the heat with the cooling medium. In the EGR gas cooled by the EGR heat exchanger 80, the temperature is reduced and the density is increased. Since the EGR gas is taken together with fresh air into the compressor unit 22 and compressed, it is effective to increase the compression efficiency of the compressor unit 22.

The EGR heat exchanger 80 may be omitted appropriately depending on, for example, operation conditions or the like of the main engine 10. Reference numeral 81 in the figure, denotes a water-supply pipe for supplying, for example, water as the cooling medium.

That is, the purification device 1 according to the embodiment is a device for reducing and eliminating air pollution substances contained in the exhaust gases discharged from the main engine 10 which is equipped with the exhaust gas turbocharger 20. The purification device 1 includes an exhaust gas cleaning unit 70 for cleaning a portion of the exhaust gases which is introduced as the EGR gas from the exhaust line L3 located at the upstream side of the turbine unit 21 of the exhaust gas turbocharger 20, and the EGR turbocharger 60 disposed at the upstream side of the exhaust gas cleaning unit 70.

In this case, in the EGR turbocharger 60, the EGR compressor unit 62, which is coaxial with the EGR turbine unit 61 driven by using the EGR gas, turns to take the EGR exhaust gases which have passed through the exhaust gas cleaning unit 70 into the EGR compressor unit 62 and pressurize the same.

The purification device 1 structured as described above drives the EGR turbocharger 60 by efficiently utilizing the energy contained in the exhaust gases from the main engine 10 to pressurize the cleaned EGR gas by the EGR compressor unit 62 of the EGR turbocharger 60. Therefore, the exhaust gas cleaning unit 70 cleans the EGR gas with reduced temperature and pressure after being used for driving the EGR turbine unit 61. Therefore, a device specified at a low temperature and low pressure which provides high reliability and durability, may be employed for the exhaust gas cleaning unit 70.

Also, since the EGR gas, which has been pressurized by the EGR compressor unit 62, is supplied together with fresh air to the compressor unit 22 of the exhaust gas turbocharger 20, no electric compressor blower is required for raising the pressure of the cleaned EGR gas. That is, since the fresh air, which is taken by the compressor unit 22 of the exhaust gas turbocharger 20, is at an atmospheric pressure, the EGR gas, the pressure of which has been reduced due to the cleaning processing, can be merged with the fresh air without being pressurized by a blower or the like. In other words, the EGR turbocharger 60 has to pressurize the cleaned EGR gas to only an extent that makes up for the pressure which is lost before the cleaned EGR gas reaches the exhaust gas turbocharger 20. The cleaned EGR gas is pressurized by the EGR turbocharger 60 without consuming any electric power and can be supplied to the compressor unit 22 of the exhaust gas turbocharger 20.

Also since the purification device 1 is provided with the EGR heat exchanger 80 that cools the EGR gas which has been pressurized by the EGR compressor unit 62 and supplies the same to the compressor unit 22 of the exhaust gas turbocharger 20, the EGR for supplying the air while efficiently merging a high density EGR gas with the fresh air is achieved.

As for the EGR turbocharger 60, a hybrid turbocharger, which is provided with the EGR turbine unit 61 and the power generator 64 coaxially connected with the EGR compressor unit 62 by rotary shaft 63a, is preferably employed. By employing the hybrid turbocharger for the EGR turbocharger 60, the EGR turbocharger 60 not only pressurizes the EGR gas but also obtains the electric power by the power generator 64 by effectively utilizing the output of the EGR turbocharger 60.

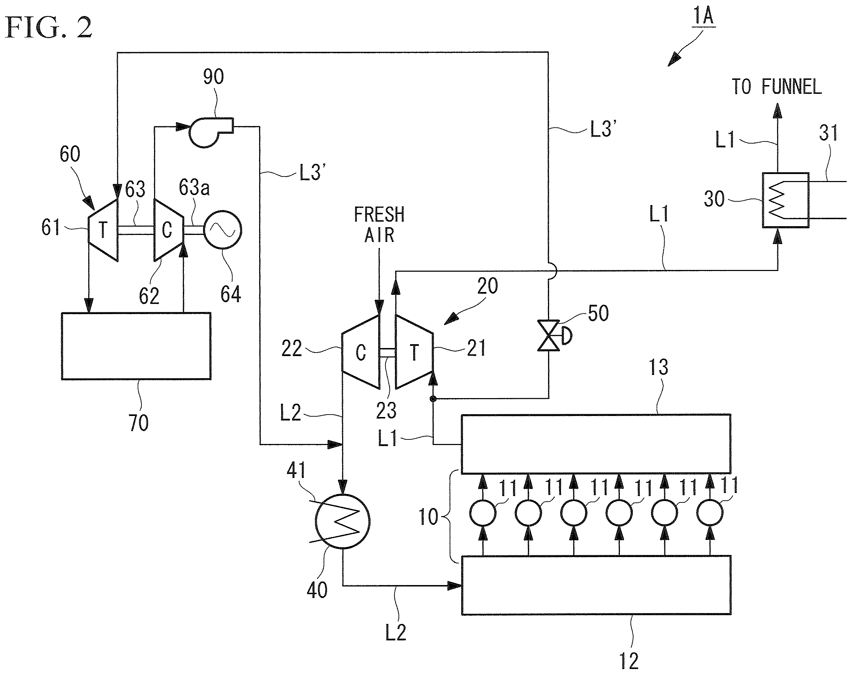

Subsequently, referring to Fig. 2, a second embodiment of the purification device according to the present invention will be described. The parts which are the identical to those described in the first embodiment will be given with the same reference numerals and detailed description thereof is omitted here.

In a purification device 1A according to the second embodiment, a blower 90 is provided in an EGR line L3' to raise again the pressure of the EGR gas, which has been pressurized by the EGR compressor unit 62 of the EGR turbocharger 60. The blower 90 is an electric blower which is disposed downstream the EGR compressor 62 and is driven by an electric motor as a drive unit (not shown).

Also, the EGR line L3' according to the second embodiment is different from that in the first embodiment in a part downstream the EGR compressor unit 62. The EGR line L3' merges with the air supply line L2 at a point on the air supply line L2 between the compressor unit 22 and the air cooler 40. That is, the pressure of the EGR gas, which has been raised being compressed by the EGR compressor unit 62, is further raised by the blower 90 and the EGR gas is supplied so as to merge with the fresh air, the pressure of which has been raised by the compressor unit 22 of the exhaust gas turbocharger 20, at a point on the air supply line L2 between the compressor unit 22 and the air cooler 40.

In this case, the pressure of the EGR gas is raised again by the blower 90 to a level to push the EGR gas into the fresh air which has been compressed by the exhaust gas turbocharger 20. Therefore, the EGR gas can be supplied to the fresh air by raising the pressure of the EGR gas to a level of scavenging pressure from the main engine 10.

The blower 90 as described above is used for supplementally raising the pressure of the EGR gas to make up for a shortage of the pressurization by the EGR turbocharger 60. Therefore, even an electric blower with small power consumption provides sufficient capacity.

Also, the EGR turbocharger 60 according to the second embodiment may be a hybrid turbocharger which is equipped with a power generator 64 same as the first embodiment.

The purification device 1 or 1A according to the above-described embodiments of the invention has a structure in which the exhaust energy emitted from the main engine 10 as the marine main engine is efficiently utilized; and the pressure of the cleaned EGR gas is raised by the EGR turbocharger 60 by utilizing the output of the EGR gas. Therefore, the exhaust gas cleaning unit 70 cleans only the EGR gas which is at a low temperature and a low pressure after being used for a work at the EGR turbine unit 61. Therefore, for the exhaust gas cleaning unit 70 in the purification device 1 or 1A, a device specified at a low temperature and low pressure, which provide high reliability and durability, may be used.

In any case of the above-described purification devices 1 and 1A, the EGR gas is used for performing a work at the EGR turbine unit 61 to thereby raise the pressure of the cleaned EGR gas by the EGR compressor unit 62. Accordingly, the electrically driven blower 90 for raising the pressure of the EGR gas can be eliminated, or by the blower 90 of small capacity may be used to thereby reduce the power consumption.

With this, the number or power generation capacity of the power generating auxiliary machines (not shown in figures) for supplying the power necessary for driving the purification device 1 or 1A may be reduced. Accordingly, the purification device 1 or 1A according to the embodiment of the invention, in addition to cost reduction of the device, the degree of layout freedom of instruments provided in the ship is also increased. Moreover, since the number of power generating auxiliary machines, which have a problem in mileage, can be reduced, the cost for operation the ship can be reduced.

The present invention is not limited to the above-described embodiments but may be appropriately modified within the scope of the invention.

### {Reference Signs List}

1, 1A engine exhaust gas purification device (purification device)
10 main engine (main engine for propelling a ship)
11 cylinder
12 intake manifold
13 exhaust manifold
20 exhaust gas turbocharger
21 turbine unit
22 compressor unit
30 exhaust gas economizer
40 air cooler
50 flow control valve
60 recirculation exhaust gas turbocharger (EGR turbocharger)
61 recirculation turbine unit (EGR turbine unit)
62 recirculation compressor unit (EGR compressor unit)
70 exhaust gas cleaning unit
80 EGR heat exchanger
90 blower
L1 exhaust line
L2 air supply line
L3, L3' exhaust gas recirculation line (EGR line)

## Claims

1. An engine exhaust gas purification device (1; 1A) for reducing or eliminating air pollution substances contained in exhaust gases discharged from a marine main engine (10) equipped with an exhaust gas turbocharger (20), comprising:
an exhaust gas cleaning unit (70) that cleans a portion of exhaust gas, the portion of the exhaust gas being branched from an exhaust line (L1) located at the upstream side of a turbine unit (21) in the exhaust gas turbocharger (20) and introduced as a recirculation exhaust gas; and
a recirculation exhaust gas turbocharger (60) including
a recirculation turbine unit (61) which is disposed at the upstream side of the exhaust gas cleaning unit (70), and
a recirculation compressor unit (62) coaxial with the recirculation turbine unit (61),
wherein the recirculation turbine unit (61) is driven by utilizing the recirculation exhaust gas,
wherein the exhaust gas cleaning unit (70) cleans the recirculation exhaust gas which has passed through the recirculation turbine unit (61),
the recirculation exhaust gas turbocharger (60) takes the recirculation exhaust gas which has passed the exhaust gas cleaning unit (70) into the recirculation compressor unit (62), and the recirculation compressor unit (62) pressurizes the recirculation exhaust gas which has passed the exhaust gas cleaning unit (70), and
the recirculation exhaust gas from the marine main engine (10) is pressurized by the recirculation compressor unit (62) and is
(a) introduced to the upstream side of a compressor unit (22) of the exhaust gas turbocharger (20), and supplied together with fresh air to the compressor unit (22) of the exhaust gas turbocharger (20), or
(b) introduced to a point between the compressor unit (22) of the exhaust gas turbocharger (20) and an air cooler (40) cooling supplied air compressed by the compressor unit (22) of the exhaust gas turbocharger (20), and merged with fresh air which has been pressurized by the compressor unit (22) of the exhaust gas turbocharger (20), and
wherein the recirculation exhaust gas pressurized by the recirculation compressor unit (62) is supplied to the marine main engine (10) after being merged with the fresh air.

2. The engine exhaust gas purification device according to claim 1, further comprising a heat exchanger (80) that cools the recirculation exhaust gas pressurized by the recirculation compressor unit (62) and supplies the same to the compressor unit (22) of the exhaust gas turbocharger (20).

3. The engine exhaust gas purification device according to claim 1, wherein the recirculation exhaust gas pressurized by the recirculation compressor unit (62) is supplied, after being re-pressurized by a blower (90), so as to merge with fresh air which has been pressurized by the compressor unit (22) of the exhaust gas turbocharger (20).

4. The engine exhaust gas purification device according to any one of claims 1-3, wherein the recirculation exhaust gas turbocharger (60) is a hybrid turbocharger equipped with a power generator coaxial therewith.

## Patentansprüche

1. Motorabgasreinigungsvorrichtung (1; 1A) zum Reduzieren oder Beseitigen von Luftverschmutzungssubstanzen, die in Abgasen enthalten sind, die von einem Schiffshauptmotor (10), der mit einem Abgasturbolader (20) ausgestattet ist, abgegeben werden, umfassend:
eine Abgasreinigungseinheit (70), die einen Teil des Abgases reinigt, wobei der Teil des Abgases von einer Abgasleitung (L1) abgezweigt wird, die sich an der stromaufwärts gelegenen Seite einer Turbineneinheit (21) im Abgasturbolader (20) befindet und als ein Rezirkulationsabgas eingeführt wird; und
einen Rezirkulationsabgasturbolader (60), der
eine Rezirkulationsturbineneinheit (61) aufweist, die an der Anströmseite der Abgasreinigungseinheit (70) angeordnet ist, undeine zu der Rezirkulationsturbineneinheit (61) koaxiale Rezirkulationskompressoreinheit (62) aufweist,
wobei die Rezirkulationsturbineneinheit (61) unter Ausnutzung des Rezirkulationsabgases angetrieben wird,
wobei die Abgasreinigungseinheit (70) das Abgas reinigt, das die Rezirkulationsturbineneinheit (61) passiert hat,
der Rezirkulationsabgasturbolader (60) das Rezirkulationsabgas, das die Abgasreinigungseinheit (70) passiert hat, in die Rezirkulationskompressoreinheit (62) führt und die Rezirkulationskompressoreinheit (62) das Rezirkulationsabgas, das die Abgasreinigungseinheit (70) passiert hat, unter Druck setzt und
das Rezirkulationsabgas des Schiffshauptmotors (10) durch die Rezirkulationskompressoreinheit (62) unter Druck gesetzt wird und
a) auf der Anströmseite einer Kompressoreinheit (22) des Abgasturboladers (20) eingeführt und zusammen mit Frischluft der Kompressoreinheit (22) des Abgasturboladers (20) zugeführt wird oder
b) an einen Punkt zwischen der Kompressoreinheit (22) des Abgasturboladers (20) und einem Luftkühler (40), der von der Kompressoreinheit (22) des Abgasturboladers (20) komprimierte Luft kühlt, eingeführt wird und mit Frischluft, die von der Kompressoreinheit (22) des Abgasturboladers (20) unter Druck gesetzt worden ist, vermischt wird, und
wobei das durch die Rezirkulationskompressoreinheit (62) unter Druck gesetzte Rezirkulationsabgas der Schiffshauptmaschine (10) nach dem Vermischen mit der Frischluft zugeführt wird.

2. Motorabgasreinigungsvorrichtung nach Anspruch 1, weiterhin umfassend einen Wärmetauscher (80), der das durch die Rezirkulationskompressoreinheit (62) unter Druck gesetzte Rezirkulationsabgas kühlt und selbiges der Kompressoreinheit (22) des Abgasturboladers (20) zuführt.

3. Motorabgasreinigungsvorrichtung nach Anspruch 1, wobei das durch die Rezirkulationskompressoreinheit (62) unter Druck gesetzte Rezirkulationsabgas bereit gestellt wird, nachdem es durch ein Gebläse (90) wieder unter Druck gesetzt wurde, sodass es sich mit Frischluft vermischt, die durch die Kompressoreinheit (22) des Abgasturboladers (20) unter Druck gesetzt worden ist.

4. Motorabgasreinigungsvorrichtung nach einem der Ansprüche 1-3, wobei der Rezirkulationsabgasturbolader (60) ein Hybridturbolader ist, der mit einem dazu koaxialen Stromgenerator ausgerüstet ist.

## Revendications

1. Dispositif de purification de gaz d'échappement de moteur (1; 1A) destiné à réduire ou éliminer des substances de pollution de l'air contenues dans des gaz d'échappement évacués d'un moteur principal marin (10) équipé d'un turbocompresseur de gaz d'échappement (20), comprenant :
une unité de nettoyage de gaz d'échappement (70) qui nettoie une portion de gaz d'échappement, la portion des gaz d'échappement étant ramifiée à partir d'une ligne d'échappement (L1) située du côté amont d'une unité de turbine (21) dans le turbocompresseur de gaz d'échappement (20) et introduite en tant que gaz d'échappement de recirculation ; et
un turbocompresseur de gaz d'échappement de recirculation (60) incluant
une unité de turbine de recirculation (61) qui est disposée du côté amont de l'unité de nettoyage de gaz d'échappement (70), et
une unité de compresseur de recirculation (62) coaxiale avec l'unité de turbine de recirculation (61),
dans lequel l'unité de turbine de recirculation (61) est entraînée par l'utilisation des gaz d'échappement de recirculation,
dans lequel l'unité de nettoyage de gaz d'échappement (70) nettoie les gaz d'échappement de recirculation qui ont traversé l'unité de turbine de recirculation (61),
le turbocompresseur de gaz d'échappement de recirculation (60) prélève les gaz d'échappement de recirculation qui ont traversé l'unité de nettoyage de gaz d'échappement (70) dans l'unité de compresseur de recirculation (62), et l'unité de compresseur de recirculation (62) pressurise les gaz d'échappement de recirculation qui ont traversé l'unité de nettoyage de gaz d'échappement (70), et
les gaz d'échappement de recirculation provenant du moteur principal marin (10) sont pressurisés par l'unité de compresseur de recirculation (62) et sont
(a) introduits du côté amont d'une unité de compresseur (22) du turbocompresseur de gaz d'échappement (20), et fournis conjointement avec de l'air frais à l'unité de compresseur (22) du turbocompresseur de gaz d'échappement (20), ou
(b) introduits en un point entre l'unité de compresseur (22) du turbocompresseur de gaz d'échappement (20) et un refroidisseur d'air (40) refroidissant de l'air fourni comprimé par l'unité de compresseur (22) du turbocompresseur de gaz d'échappement (20), et fusionné avec de l'air frais qui a été pressurisé par l'unité de compresseur (22) du turbocompresseur de gaz d'échappement (20), et
dans lequel le gaz d'échappement de recirculation pressurisé par l'unité de compresseur de recirculation (62) est fourni au moteur principal marin (10) après avoir fusionné avec l'air frais.

2. Dispositif de purification de gaz d'échappement de moteur selon la revendication 1, comprenant en outre un échangeur de chaleur (80) qui refroidit les gaz d'échappement de recirculation pressurisés par l'unité de compresseur de recirculation (62) et fournit ceux-ci à l'unité de compresseur (22) du turbocompresseur de gaz d'échappement (20).

3. Dispositif de purification de gaz d'échappement de moteur selon la revendication 1, dans lequel les gaz d'échappement de recirculation pressurisés par l'unité de compresseur de recirculation (62) sont fournis, après avoir été repressurisé par une soufflante (90), de manière à fusionner avec de l'air frais qui a été pressurisé par l'unité de compresseur (22) du turbocompresseur de gaz d'échappement (20).

4. Dispositif de purification de gaz d'échappement de moteur selon l'une quelconque des revendications 1 à 3, dans lequel le turbocompresseur de gaz d'échappement de recirculation (60) est un turbocompresseur hybride équipé d'un générateur d'électricité coaxial avec celui-ci.
